# EUROPEAN PATENT APPLICATION

(11) **EP 1 958 889 A2**
(43) Date of publication of application: **20.08.2008**
(21) Application number: 08425093.5
(22) Date of filing: 15.02.2008
(51) Int. Cl.: B65D 81/02

(54) **Structure for dissipating impact energy**

(30) Priority: 16.02.2007 IT SA20070006
(71) Applicant: De Riso, Giorgio, 84121 Salerno (IT); Angelillo, Maurizio, 00152 Roma (IT); Velardi, Francesco, 00189 Roma (IT)
(72) Inventor: De Riso, Giorgio, 84121 Salerno (IT); Angelillo, Maurizio, 00152 Roma (IT); Velardi, Francesco, 00189 Roma (IT)
(74) Representative: Iannone, Carlo Luigi

(57) **Abstract**

The invention relates to a structure for dissipation of impact energy characterised in that it comprises thin packages (10), each package being comprised of a plurality of elementary cells (1), each elementary cell being comprised of a sheet fold along folding lines provided according to a suitable configuration.

The invention further relates a method for realisation of the structure for dissipating impact energy.

## Description

The present invention relates to a structure for dissipating impact energy.

More specifically, the invention relates to a structure of the above kind comprised of a thin alveolar layer, to be used as an interface for protection of body from accidental shocks by dissipation of impact energy.

As it is well known, in most cases, a packaging wounds most objects that are usually manufactured and sold.

For example, food is put on the market within packagings, post packages are wound by a protection, and even persons onboard an auto or motor vehicle are carefully "packaged" and protected.

Speaking in absolute terms, it is difficult saying how much money it is spent for packaging, or costs due to damages caused by an inadequate packaging; in any case they are very high sums.

On the basis of the above, every improvement of the packaging features potentially has very high positive practical and economical effects.

In this situation it is included the solution suggested by the present invention, satisfying the needing of absorption of quite high part of kinetic energy (10³ - 10⁴ Joule/m²) in case of not ballistic shocks, by the provision of protective layers having a reduced thickness.

In fact, many circumstances exist in which it is necessary protecting animated or unanimated objects from accidental shocks, using rather compact protective layers (e.g. helmets).

Protective layers usually employed have low energy dissipation features. Recently, it has been suggested the use of metallic foams, which however are not efficient and at the same time make the layer too much heavy; as an alternative, polyurethane foams have been employed, said foams being lighter, but have a low dissipative effect.

The solution suggested according to the present invention suggests realisation of thin packages, that are used as interfaces for protection of bodies from accidental shocks by dissipation of impact energy, having structures comprised of cylindrical box cells, with different sections (such as square, rectangular, hexagonal section), i.e. low density alveolar solids generated by modular repetition of the single cell, obtained by working plane metallic sheets.

These and other results are obtained according to the invention suggesting cellular elements, obtained by working plane metallic sheets (e.g. aluminium sheets), which are reasonably light and with a geometry permitting taking form structure collapse maximum available dissipation under compression, wherein dissipation is obtained transforming kinetic energy into heat, plasticising under flexion the material along folding lines provided on the sheets, since, during the shock, structure is subjected to progressive collapse by axial compression (folding) of all cells comprising the alveolar structure of the package.

It is therefore specific object of the present invention a structure for dissipation of impact energy comprising thin packages, each package being comprised of a plurality of elementary cells, each elementary cell being comprised of a sheet fold along folding lines provided according to a suitable configuration.

Preferably, according to the invention, said elementary cells are comprised of metallic sheet, particularly aluminium sheet.

Still according to the invention, said elementary cells are cold fold.

Furthermore, according to the invention, said structure has two end plates comprised of composite material.

Always according to the invention, said packages have a box structure, e.g. a square, rectangular, hexagonal shape.

The invention further relates to a method for realising a structure for dissipating impact energy as described in the above, comprising:
- a cold folding step for the elementary cells according to upward and downward folding lines;
- assembling the single cold fold elementary cells thus creating a single package;
- combination of single packages for realising an alveolar structure; and
- eventually providing end plates.

The present invention will be now described, for illustrative but not limitative purposes, according to its preferred embodiments, with particular reference to the figures of the enclosed drawings, wherein:
figure 1 shows a front view of the elementary cell before folding;
figure 2 shows a top view of the elementary cell after folding;
figure 3 shows an axonometric view of the elementary cell after folding;
figure 4 shows an evolution of deformation of elementary cell under axial compression during the impact;
figure 5 is a front view of a portion of sheet cut before folding, with the elementary cell put into evidence;
figure 6 shows a part of cut and fold sheet;
figure 7 shows an assembling scheme of fold sheets;
figure 8 is a top view of a portion of a square cell alveolar assembled element;
figure 9 is an axonometric view of a square cell alveolar assembled element;
figure 10 is an axonometric view of assembled element of figure 9; and
figure 11 shows an axonometric cut away view of a portion of the finished package.

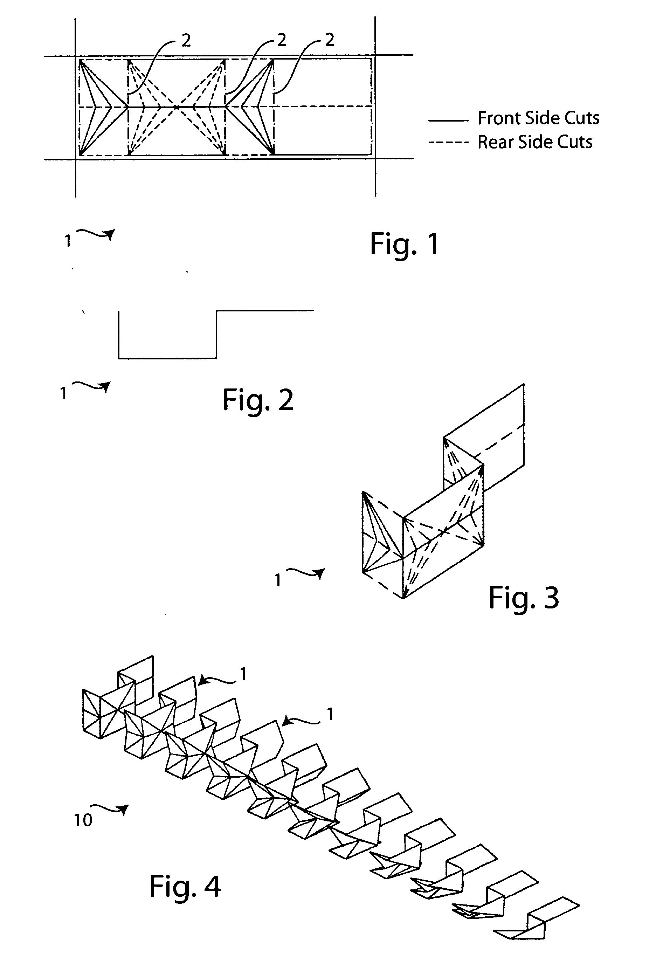

Observing first figure 1 of the enclosed drawings, it is shown an elementary cell, generically indicated by reference number 1. Elementary cell is comprised of a metallic sheet portion (e.g. an aluminium sheet), on which folding lines, generically indicated by reference number 2) are evidenced, realised partially incising the sheet. Particularly, see figure 1, dashed lines represent incisions on the rear side of the sheet part observed from the drawing and that must start upward lines, while continuous lines represent incisions in the front part of the same sheet starting downward lines.

In the specific example shown in the figures, thickness of sheet is between 2 tenth and 4 tenth of millimetre, while incisions have between 3/4 and 3/2 of tenth of millimetre in width and depth.

It is evident that incision of sheet is the first working step.

A top view of elementary cell 1 is shown in figure 1, after the second working step, i.e. cold folding along cell 1 height.

An axonometric view of elementary cell 1 is shown in figure 3, in a configuration destined to occupy in the inventive package.

Observing now figure 4, it can be understood the deformation process of cell 1 when included in finished package 10 according to the invention, when package is subjected to a gradually growing axial load.

Particularly, deformation is comprised of a kinematic motion of rigid elements, comprised of triangles included between adjacent folding lines, linked each other by plastic hinges along folding lines 2, along which all deformation is concentrated.

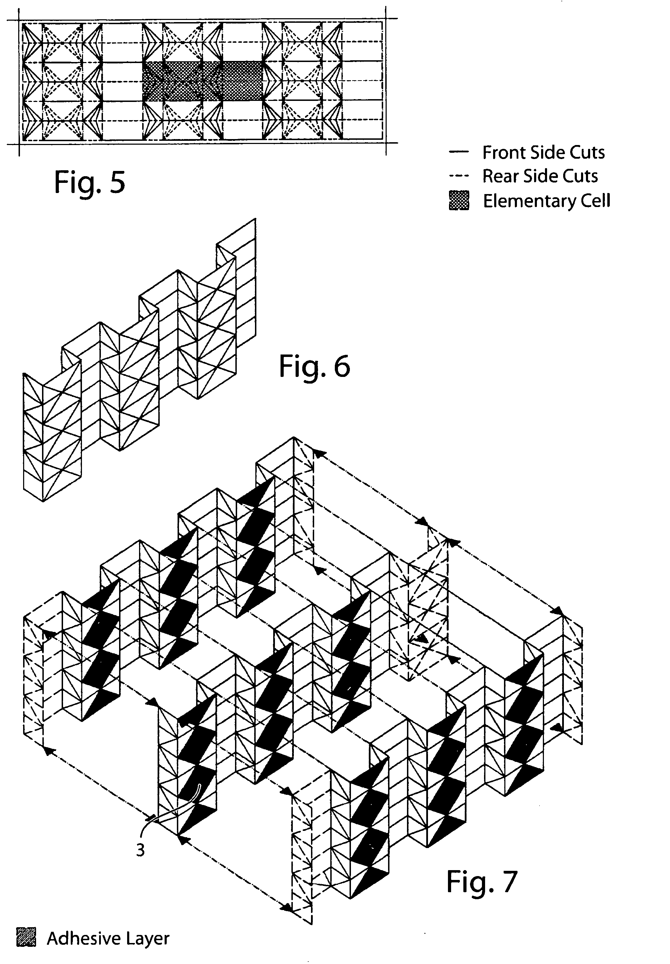

Coming now to observe figure 5, it is shown a front view of a flat sheet portion comprised of nine cells 1, showing the periodic structure of the cell 1 of figure 1.

The same portion is shown in figure 6 after the second working step, i.e. cold folding of sheet along its height.

Third working step is represented in figure 7: sheet assembling, that are partially approached and glued (adhesive layer 3) on faces in contact each other for realising alveolar package 10.

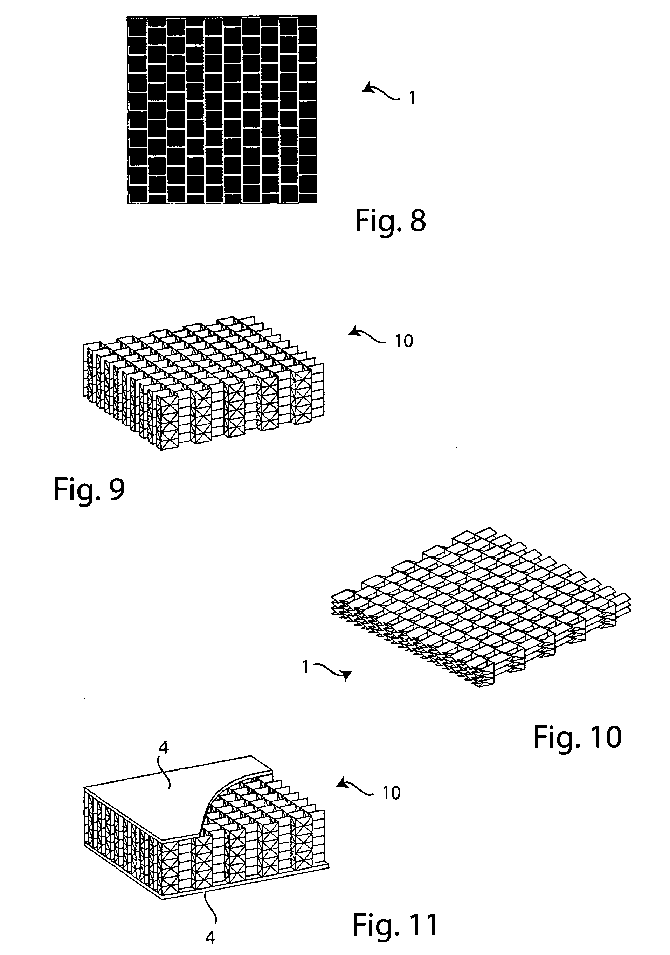

Coming now to observe figures 8 - 11, it is shown a square mesh alveolar package 10, having dimensions 50 mm x 50 mm x 15 mm, comprised of ten flat sheets (15 mm x 75 mm) on each one being provided 15 cells. Package 10 thus comprises a total amount of 150 cells. Figure 9 shows an axonometric of package 10 of the pre-impact geometry. Figure 10 shows package 10 during the post-impact collapse, evidencing the case that deformation involves all cells 1 and that square mesh still remains not deformed and moves only vertically during the collapse. Finally, figure 11 shows a cut away view of package 10 with two end plates 4, comprised of composite material, having incisions on their part contacting the alveolar structure for receiving the square mesh and preventing its deformation.

Package 10 according to the invention is designed for folding under impact in a controlled way, i.e. a progressive, repeatable and not local way. This feature is obtained incising a special configuration on sheet surface, comprised of organised lines so that once fold and glued, sheets realise a package alveolar structure essentially behaving as a mechanical system with a single freedom degree. More natural Langrange parameter for describing deformation of package 10 is axial shortening of element.

Specific features of efficiency of package 10 can be varied in function of energy involved, depending on design mass and velocity of bodies to be protected, modifying geometrical and mechanical features of the same package 10.

A specific embodiment of package 10 according to the invention is shown in the figures. However, alveolar layers having similar features can be obtained with different variations and changes of geometry (shape of cell 1, folding configuration) without departing from the scope of the invention.

Substantially, to realise a package 10 according to the invention it is necessary employing an alveolar element comprised of ductile material that, behaving under compression essentially as a one freedom degree structure, can, folding in a controlled, not local, way, dissipating kinetic energy transforming it into heat by progressive plasticisation, during axial direction compression, of all cells comprising the alveolar package.

By the solution according to the invention, it is obtained a structure for dissipation of impact energy, with the following desirable features:
- alveolar layer is thin and light,
- it is possible realising different alveolar shapes with simple modification of folding method;
- many shapes can be realised folding a single metal sheet, and can be employed employing different economic working techniques for their production.

Further, specific efficiency features can be modified in function of the energy involved, depending on the design mass and velocity of body to be protected, modifying:
- mechanical features of materials;
- cell dimensions;
- ratio between cell dimension and sheet thickness;
- height of package and number of waves along its height;
- configuration geometry.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Structure for dissipation of impact energy **characterised in that** it comprises thin packages, each package being comprised of a plurality of elementary cells, each elementary cell being comprised of a sheet fold along folding lines provided according to a suitable configuration.

2. Structure for dissipation of impact energy according to claim 1, **characterised in that** said elementary cells are comprised of metallic sheet, particularly aluminium sheet.

3. Structure for dissipation of impact energy according to one of the preceding claims, **characterised in that** said elementary cells are cold fold.

4. Structure for dissipation of impact energy according to one of the preceding claims, **characterised in that** said structure has two end plates comprised of composite material.

5. Structure for dissipation of impact energy according to one of the preceding claims, **characterised in that** said packages have a box structure, e.g. a square, rectangular, hexagonal shape.

6. Method for realising a structure for dissipating impact according to one of the preceding claims 1-5, comprising:
- a cold folding step for the elementary cells according to upward and downward folding lines;
- assembling the single cold fold elementary cells thus creating a single package;
- combination of single packages for realising an alveolar structure; and
- eventually providing end plates.
